# EUROPEAN PATENT SPECIFICATION

(11) **EP 2 040 568 B1**
(45) Date of publication and mention of the grant of the patent: **22.06.2011**
(21) Application number: 07836103.7
(22) Date of filing: 17.07.2007
(51) Int. Cl.: A23L 1/20

(54) **HIGH PROTEIN SOYBEAN MEAL FOR SWINE FEED**
SOJABOHNENGERICHT MIT HOHEM PROTEINGEHALT FÜR SCHWEINEFUTTER
TOURTEAU DE SOJA À HAUTE TENEUR EN PROTÉINES POUR L'ALIMENTATION DES PORCS

(30) Priority: 17.07.2006 US 831711 P
(43) Date of publication of application: 01.04.2009
(73) Proprietor: Renessen LLC, St. Louis, MO 63167 (US)
(72) Inventor: LIANG, Jihong, St.Louis, MO 63167 (US); CHI, Fang, St. Louis, MO 63167 (US); KOTOWSKI, Douglas, C., St.Louis. MO 63167 (US)
(74) Representative: von Kreisler Selting Werner
(86) International application number: PCT/US2007/016206
(87) International publication number: WO 2008/011031

(56) References cited:
- WO-A2-2005/072367
- WO-A2-2005/072367
- WO-A2-2007/022341
- US-A- 6 147 193
- US-A1- 2005 095 345
- EDWARDS H M ET AL: "PROTEIN AND EVALUATION OF SOYBEAN MEAL PROCESSED FROM GENETICALLY MODIFIED HIGH-PROTEIN SOYBEANS" POULTRY SCIENCE, CHAMPAIGN, IL, US, vol. 79, 1 January 2000 (2000-01-01), pages 525-527, XP008078411 ISSN: 0032-5791

## Description

The present invention relates to the area of animal nutrition and specialty feeds for swine. In particular the present invention relates to a high protein soybean meal suitable for use as an ingredient in swine feeding operations.

Soybeans are a major agricultural commodity in many parts of the world, and they are the source of many useful products for both human and animal consumption. Two of the more important commercial products obtained from soybeans are soybean oil and soybean meal. Soybean oil is used as an energy source in animal feeds although its primary use is for human consumption. Soybean meal is used primarily as a component in animal feed.

Commercial soybean meals are a good source of amino acids in poultry diets as they are relatively high in protein when compared to other grain sources such as corn. A soybean meal having a higher protein content would be desirable (Edwards et al., Poultry Sci., 79:525-527 (2000)). There is a limitation, however, on total endogenous protein content in commercial soybean meal because commercial soybeans are typically about 41% protein on a dry matter basis. Substantially higher protein content in soybeans, such as in excess of 55% on a dry weight basis, has been uniformly associated with poor agronomic qualities, such as poor yield. See for example, Wehrmann et al., Crop Sci., 27:927-931 (1987) and Simpson and Wilcox, Crop Sci., 23:1077-1081(1983). Additionally, use of exogenous protein sources to supplement soybean meals adds cost and formulation problems.

Further, soybean products including soybean meal having a higher endogenous protein content that is derived from soybeans that have favorable agronomic qualities are disclosed in WO 2007/022341 (relevant under Art. 54(3) EPC), WO 2005/072367, US 6,174,193, US 2005/0095354 and H. M. Edwards III et al., Poultry Science (79), 525-527 (2000).

### SUMMARY OF THE INVENTION

The present invention provides for the use of a soybean meal, generated from a soybean capable of commercial yields, comprising at least 58% protein on a dry weight basis for a swine feed. In a preferred embodiment, the soybean meal is generated from a soybean capable of commercial yields, comprising at least 60% protein on a dry weight basis. In a further preferred embodiment, the soybean meal is generated from a soybean capable of commercial yields, comprising at least 62% protein on a dry weight basis

In yet another preferred embodiment, the soybean has an actual grain yield, under standard agronomic practices, of at least about 428 l/ha (30 bushels per acre). In a further preferred embodiment, the soybean has a comparative yield of at least about 67% of an agronomically elite variety.

The present invention further provides a method of feeding swine comprising incorporating into a feed ration a soybean meal as defined above, generated from a soybean capable of commercial yields, comprising at least 58% protein on a dry weight basis.

In a further aspect of the present invention, the soybean is transgenic. In yet a further aspect, the transgenic soybean comprises an exogenous gene conferring herbicide resistance. In yet a further aspect, the transgenic soybean is resistant to glyphosate herbicides.

The use of the high protein soybean meal as defined above as swine feed results in an increase in energy in swine.

### DETAILED DESCRIPTION OF THE PREFERRED EMBODIMENTS

The present invention includes the use of a new soybean meal in swine feeding operations.

The following definitions are used herein:

Agronomically Elite: A soybean genotype that has many distinguishable traits, such as emergence, vigor, vegetative vigor, disease resistance, seed set, standability, and threshability, which allows a producer to harvest a product of commercial significance.

Commercial Yield: A yield of grain having commercial significance to the grower represented by an actual grain yield of at least 428 l/ha (30 bushels per acre (Bu/A)) as a mean measured over at least 14 environments, grown under standard agronomic practices.

Comparative Yield: A yield of grain, stated as a percentage of a yield of another soybean variety grown under comparative yield trial conditions. Conditions for comparative yield trials are well known in the art of soybean breeding. For example, a soybean variety having a yield of 613 l/ha (43 Bu/A) would have a comparative yield of 80% of an agronomically elite soybean variety having a yield of 770 l/ha (54 Bu/A).

Dehulled Soybean Meal: A soybean meal having most of the hull fraction removed during the dehulling process step. The dehulled, solvent extracted soybean meal must not contain more than 3,5% fiber and typically contains between 48-50% protein at a 12% moisture basis.

Exogenous Protein: Protein that is not an intrinsic part of the soybean from which the soybean meal has been produced. Exogenous protein may be added to the meal or to the feed, in order to increase the protein concentration in the respective products.

Full Fat Soybean Meal: A soybean meal produced without extraction of oil.

High Fiber Soybean Meal: A soybean meal wherein the dehulling process has been omitted or minimized. Typical fiber levels in high fiber soybeans are 4-8% at 12% moisture basis.

Isonutritive diets: Animal diets formulated to have equal levels of nutrients, including energy, protein, and essential amino acids.

Isometric diet: Animal diets that are formulated to have the same levels of a particular ingredient. For instance, a hypothetical diet A containing 25% commodity soybean meal, and a hypothetical diet B containing 25% high protein soybean meal, are said to be isometric with respect to soybean meal.

Isonitrogenous diet: Animal diets that are formulated at the same levels of protein and essential amino acids.

Lodging Score: Lodging is rated on a scale of 1 to 9. A score of 1 indicates erect plants. A score of 5 indicates plants are leaning at a 45 degree(s) angle in relation to the ground and a score of 9 indicates plants are laying on the ground.

Oil content: Weight percentage of oil contained in soybean seed or soybean meal, stated on a dry basis.

Phenotype: The detectable characteristics of a cell or organism, which characteristics are the manifestation of gene expression.

Protein Content: Weight percentage of protein contained in soybean seed or soybean meal, stated on a dry weight basis unless noted otherwise.

Relative Maturity: The maturity grouping designated by the soybean industry over a given growing area. This figure is generally divided into tenths of a relative maturity group. Within narrow comparisons, the difference of a tenth of a relative maturity group equates very roughly to a day difference in maturity at harvest.

Soybean Meal: A feed ingredient that is a product of processing soybean grain, wherein most of the oil (fat) is removed. The phrase "soybean meal," as used in the context of this present invention, refers to a defatted, desolventized, toasted, and ground soybean material, to which no exogenous source of protein has been added.

Soybean Protein Isolate: The major proteinaceous fraction of soybeans, prepared from dehulled soybeans by removing the majority of non-protein components and containing not less than about 90% protein on a dry weight basis.

Soybean Protein Concentrate: A preparation from high quality soybean seeds, prepared by removing most of the oil and water soluble non-protein constituents and containing not less than about 65% protein on a moisture-free basis.

Standard Agronomic Practices: Those practices employed by a commercial grower, which would ensure at least an average yield for the defined region. Included in standard agronomic practices are planting, fertilization, weed control, insect control, disease control, and grain harvest.

### High Protein Soybean Varieties

The present invention provides high protein soybean meals derived from soybean varieties that are capable of commercial yields and have a protein content of at least 45% on a dry weight basis. Additionally, the present invention provides soybean meal derived from soybean varieties that are capable of commercial yields, and have a high protein content without a corresponding reduction in seed oil. In particular, the present invention provides soybean meals having a protein content of at least 58% protein on a dry weight basis, derived from soybean varieties with a mean whole seed total protein content of greater than 45%. Such soybean varieties are characterized as being capable of a commercial yield. As used herein, a commercial yield is defined as a mean yield of at least about 30 bushels per acre, measured over at least 14 environments, and grown with standard agronomic practices.

The high protein soybean varieties of the present invention preferably further comprise a mean whole seed total protein plus oil content of greater than about 64%, about 66%, about 68%, or about 70% on a dry weight basis. In further embodiments of the present invention, the high protein soybean varieties have a mean whole seed total protein content on a dry weight basis of at least about 45% up to about 50%.

Examples of soybean varieties that are used in the context of the present invention are those having a mean whole seed total protein content of greater than 45%, or a mean whole seed total protein plus oil content of 64%. Most preferably such soybean varieties are capable of a commercial yield, such as, without limitation, soybean varieties 0008079, 0137335, 0137472, 0137441, and 0137810, as described by Byrum et al. (U.S. Published Application No. 20040060082).

Further examples of high protein soybean varieties used in the context of the present invention that have a capability for commercial yields are the soybean varieties DBL3404D0R, DCP2904B0R, DFN3204E0R, DFN2204D0R, DRM2004A0R, DOX2804E0R.

Additional examples of high protein soybean varieties preferably used in the context of the present invention, that are capable of commercial yields, are the soybean varieties EXP125A (designated as "Soybean variety 007583" in U.S. Patent Application No. 10/194,922, filed 7/11/2002; American Type Culture Collection (ATCC) deposit number PTA-5764), EXP2702REN (designated as "Soybean variety 0137443" in U.S. Patent Application No. 10/745,299, filed on 12/23/2003; ATCC deposit number PTA-5762), EXP2902REN (designated as "Soybean variety 0137400" in U.S. Patent Application No. 10/745,300, filed on 12/23/2003; ATCC deposit number PTA-5763), EXP2303REN, and EXP3103REN.

One preferred aspect of the present invention is directed to a soybean meal generated from soybean varieties having the characteristics set forth above, and, in particular, from the specific soybean varieties set forth herein as examples. A further aspect of the present invention is directed to soybean meal generated from soybeans generated from tissue cultures of regenerable cells of the above mentioned high protein soybean varieties, which cultures regenerate soybean plants capable of producing seed expressing all the physiological and morphological characteristics of the variety. Such regenerable cells may include embryos, meristematic cells, pollen, leaves, roots, root tips or flowers, or protoplasts or callus, derived therefrom.

The soybean varieties listed above are for illustrative purposes and are not intended to limit the scope of the present invention. Other soybean varieties having a mean whole seed total protein content of at least 45%, or a mean whole seed total protein plus oil content of at least 64%, and which are capable of commercial yields, may be used to generate the soybean meal of the present invention.

In a further preferred aspect, the soybean variety of the present invention has a comparative yield of at least about 67% of an agronomically elite variety. More preferably, the comparative yield of the soybean variety used in the context of the present invention is at least about 70%; yet more preferably, the comparative yield is at least about 75%; at least about 80%; at least about 90%; and most preferably, at least about 95%.

### Soybean Processing

Many methods are known for the processing of raw soybeans into oil and meal. Illustrative soybean meal preparation processes include those taught in U.S. Patents 4,992,294; 5,225,230; 5,773,051; and 5,866,192. Typically, commercial soybean processes include the receipt of the soybeans from the field by any conventional transport means, such as, for example, truck, barge, or rail car. The soybeans, typically received in a dirty and often wet condition, may be cleaned by being placed in contact with a vibrating screen, by which the soybeans are separated from non-soybean material, such as, for example, rocks, sticks, leaves, stems, dirt, weed seeds, and unwanted fragments of soybeans. The cleaned soybeans, in combination with the loose hulls that are not removed by the vibrating screen, are transferred to an aspirator in which most of the remaining loose hulls are removed by air. The soybeans are transferred to storage, and the loose hulls are collected as a by-product for further processing.

At this point in the processing, the soybeans typically contain about 12% by weight (wt%) water, but the actual water content of the soybeans may vary based on a host of different factors. If the water content of the soybeans is in excess of about 12 wt%, then the soybeans may be subjected to drying to reduce the water content below about 12 wt% prior to placing in storage. The control of the water content is essential to prevent mold and microbial contamination during storage.

The processing procedures from this point forward depend upon the desired end products. For example, the soybeans may be first dehulled using such conventional equipment as cracking rolls or hammer mills in combination with a conventional aspiration system. Alternatively, the hulls may not be removed prior to further processing (see, for example, U.S. Patent 5,225,230). In order to deactivate antinutritional factors, such as trypsin inhibitors, the soybeans may be subjected to heat for a set period of time prior to cracking, grinding, or crushing. The soybeans are then crushed or ground into a meal using conventional equipment, such as grooved rollers,

For cracking processes, clean, dry, whole soybeans are fed to coarsely corrugated roller mills or "crackers." These crackers can have one or more sets of rolls. Soybean pieces, called "cracks," are formed. The goal of the cracking step is to maximize the pieces that are 1/4th to 1/8th the size of the starting soybean, and minimize the formation of fines, which are pieces less than 1 mm in diameter.

From the cracking mills, particles of whole soybeans (i.e., cracks) are conveyed to multistage aspiration dehulling systems, which typically employ 1 to 3 stages. Each stage consists of an aspirator and a size screening system. At each stage, the fiber-rich "hulls" are first removed by means of a counter-current air stream and a cyclone. The heavier, fiber-lean, "meats" fraction is conveyed to a screening system that removes at least one additional fraction by size, and yields one stream for further aspiration. Alternatively, screening can be employed prior to aspiration. The "hulls" stream is typically combined with other soy byproducts and used as an animal feed ingredient. The dehulled "meats" are then dehulled again to less than about 3% crude fiber by mass (4.28% on a defatted, dry basis) using a 2 stage commercial pre-extraction process. However, the single stage systems can be employed to yield meats streams.

The resulting meats are then heat conditioned in a rotary or stack cooker. The residence times of the cracks are typically between about 20 and about 40 minutes. Discharge temperatures typically are in the range of 49 to 82°C (120 to 180°F). Lower conditioning temperatures may be employed if a greater fines production in the flaker is tolerable.

The conditioned meats are then fed to smooth roller mills called flakers. A force of greater than about 500 kPa-gauge (72.5 psig) are typically applied to the rolls. Flake thicknesses of less than about 0.75 mm (0.030") are preferably produced in order to obtain maximum oil recovery in the subsequent oil extraction step. Optionally, the cracking and dehulling steps could be eliminated, or done subsequent to the conditioning step. An additional option would be to expand a percentage of the flaked soybeans to form "collets" prior to oil extraction. Other process variations include conditioning prior to the cracking step, and eliminating the dehulling step prior to oil extraction. A soybean meal of the present invention produced in a process having the variation of eliminating or reducing the dehulling step would be considered a high protein and high fiber soybean meal. A high fiber soybean meal would have a fiber content of between 4 and 8%. This product would be a desirable feed ingredient in a swine production operation.

The next step in the process of generating soybean meal is the extraction of oil. This extraction step is typically done using a lipophilic solvent, but may also be done by mechanical extraction. In this process, the soybean meal is contacted with a suitable solvent, e.g., hexane, to remove the oil to a content of typically less than about 1% by weight. One example of a conventional solvent extraction procedure is described in U.S. Patent 3,721,569.

However, if a "full fat" soybean meal is desired, then the oil bearing meal is not subjected to oil (also known as fat or lipid) extraction. In this embodiment of the present invention, the resulting product would be a high protein, "full fat" soybean meal.

At this stage, the solvent extracted, defatted soybean meal typically contains about 30% solvent by weight. Prior to being used as an animal feed, the meal is typically processed through a desolventizer-toaster (DT) operation to remove residual solvent and to heat the protein fraction to inactivate trypsin inhibitors and other naturally occurring toxicants. Typically, steam contacts the soybean meal and the heat of vaporization released from the condensing steam vaporizes the solvent, which is subsequently recovered and recycled.

Alternatively, the soybean meal is defatted mechanically using, for example, a screw press. This mechanically extracted or "expeller" soybean meal typically contains between about 4 and about 8 wt% residual oil.

Further processing of the soybean or the meal may be done to make the resulting feed more palatable, available and/or digestible in swine. These processes include addition of enzymes or nutrients, and heat treating the meal. Additionally, further processing may be done to the meal, such as pellet and cub, to make it more compact and dense in distribution.

Further processing of the soybean meal can produce soybean flour, soybean protein concentrates, and soybean protein isolates that have food, feed, and industrial uses. Soybean flours are produced simply by grinding and screening the defatted soybean meal. Soybean protein concentrates, having at least about 65 wt% protein, are made by removing soluble carbohydrate material from defatted soybean meal. Aqueous alcohol extraction (60-80% ethanol) or acid leaching at the isoelectric pH 4.5 of the protein are the most common methods of removing the soluble carbohydrate fraction. A myriad of applications have been developed for soybean protein concentrates and texturized concentrates in processed foods, meat, poultry, fish, cereal, and dairy systems.

Soybean protein isolates are preferably produced through standard chemical isolation, drawing the protein out of the defatted soybean flake through solubilization (alkali extraction at pH 7-10) and separation followed by isoelectric precipitation. As a result, isolates are at least about 90 wt% protein on a dry weight basis. They are sometimes high in sodium and minerals (ash content), a property that can limit their application. Their major applications have been in dairy substitution, as in infant formulas and milk replacers.

Soybean flours are often used in the manufacturing of meat extenders and analogs, pet foods, baking ingredients, and other food products. Food products made from soybean flour and isolate include baby food, candy products, cereals, food drinks, noodles, yeast, beer and ale.

### Feed Formulations

The high protein soybean meal of the present invention is used in swine feed formulations. In a preferred embodiment, the high protein soybean meal of the present invention is used in feed formulations for simple stomach animals, such as swine. Due to the higher protein content of the soybean meals of the present invention, inclusion rates are commonly reduced as compared to commodity soybean meal. Use of the high protein soybean meal of the present invention in feed formulations will reduce total soy protein, soy fiber, soy oligosaccharides, and potassium ion (K+) in the feed. Reducing these components may have benefit for young mammals that can not efficiently utilize soy fiber or soy protein sources. The combination of being able to reduce the total mass of soybean meal and fat or oil supplements, when using the high protein soybean meal of the present invention, will create more space in the feed formulation for additional ingredients. This characteristic of the soybean meal of the present invention provides the benefit to the animal producer and formulator of having more choices for the feed formulation.

Another characteristic of the high protein soybean meal of the present invention is the more consistent protein and energy quality as compared to commodity soybean meal. The more consistent protein and energy quality may reduce the use of other by-products, such as meat and bone meal and poultry by-product. This would reduce the need for storage bins for ingredients and hence reduce the cost of maintenance of such ingredient bins. Examples of the flexibility in feed formulation options when using high protein soybean meal of the present invention is demonstrated in the table below. The table shows the compositions of a typical corn-soybean meal formulation (Agri Stats 2001 Annual Analysis, Agri Stats Inc., Fort Wayne, Indiana), and three alternative formulations using high protein soybean meal of the present invention. The table illustrates the ability for a formulator to substitute bakery by-products or eliminate the use of meat and bone meal when using the high protein soybean meal of the present invention as an ingredient.

Table 1. Compositions of a typical corn-soybean meal formulation (Agri Stats 2001 Annual Analysis, Agri Stats Inc., Fort Wayne, Indiana), and three alternative formulations using high protein soybean meal of the present invention.

| | **Broiler Grower Formulations** | | | |
|---|---|---|---|---|
| **Ingredients** | % | % | % | % |
| Corn | 60 | 65 | 65 | 60 |
| Soybean meal | 25 | - | - | |
| High protein soybean meal | - | 22 | 27 | 22 |
| Meat and bone meal | 5 | 5 | - | - |
| Tallow | 4 | 2 | 2 | 4 |
| Bakery by-products | - | - | - | 8 |
| Micro ingredients | 6 | 6 | 6 | 6 |

The present invention is further described in the following Examples. Standard techniques well known in the art, or the technique specifically described below, are utilized.

### EXAMPLE 1

This example describes the production of high protein soybeans useful in generating the high protein soybean meal of the present invention.

The six soybean varieties, exemplified below, were developed for high protein plus oil contents with equivalent yields to commercial varieties. The breeding and selection procedures followed those described by Byrum et al. (U.S. Published Application No. 20040060082). Three separate yield trials were conducted under standard agronomic practices typically used by commercial seed producers, at different locations throughout Indiana, Illinois, and Iowa. In each location, yield measurements and lodging evaluations were made in addition to analyses for protein and oil. Comparisons were made to selected commercial varieties in each trial. The results of the trials are shown below in Tables 2-4.

Table 2. Yield trial evaluation of a high protein soybean variety DRM2004A0R, and selected commercial soybean varieties. The results represent the means of 19 different locations across the Midwestern United States.

| **VARIETY** | **RELATIVE MATURITY** | **YIELD (l/ha (bu/A))** | **LODGING SCORE** | **PROTEIN (% dmb)** | **OIL (% dmb)** | **PROT+OIL (% dmb)** |
|---|---|---|---|---|---|---|
| **DRM2004A0R** | **2.0** | **684 (48.0)** | **1.6** | **45.3** | **20.6** | **65.9** |
| ASGROW BRAND AG1901 | 1.9 | 692 (48.5) | 2.2 | 40.1 | 22.8 | 62.9 |
| PIONEER BRAND 91M90 | 1.9 | 674 (47.3) | 1.8 | 41.2 | 20.9 | 62.1 |
| DEKALB BRAND DKB19-52 | 1.9 | 676 (47.4) | 1.3 | 39.7 | 21.7 | 61.4 |
| SYNGENTA BRAND S19-V2 | 1.9 | 692 (48.5) | 1.2 | 40.3 | 21.3 | 61.6 |
| ASGROW BRAND AG1903 | 1.9 | 706 (49.5) | 1.5 | 39.7 | 20.9 | 60.6 |
| ASGROW BRAND AG2001 | 2.0 | 684 (48.0) | 1.8 | 41.2 | 22.0 | 63.2 |
| DEKALB BRAND DKB20-52 | 2.0 | 744 (52.2) | 1.3 | 40.4 | 22.1 | 62.5 |
| PIONEER BRAND 92M00 | 2.0 | 669 (46.9) | 1.6 | 40.5 | 21.8 | 62.3 |

Table 3. Yield trial evaluation of the high protein soybean varieties DOX2804E0R and DCP2904B04, and selected commercial soybean varieties. The results represent the means of 25 different locations across the Midwestern United States.

| **VARIETY** | **RELATIVE MATURITY** | **YIELD (l/ha (bu/A))** | **LODGING SCORE** | **PROTEIN (% dmb)** | **OIL (% dmb)** | **PROT+OIL (% dmb)** |
|---|---|---|---|---|---|---|
| **DOX2804E0R** | **2.8** | **706 (49.5)** | **3.4** | **44.0** | **20.2** | **64.2** |
| **DCP2904B0R** | **2.9** | **713 (50.0)** | **2.7** | **45.5** | **19.5** | **65.0** |
| DEKALB BRAND DKB26-52 | 2.6 | 697 (48.9) | 3.7 | 40.2 | 21.9 | 62.0 |
| PIONEER BRAND 92M70 | 2.7 | 744 (52.2) | 3.0 | 38.6 | 22.8 | 61.4 |
| ASGROW BRAND AG2703 | 2.7 | 730 (51.2) | 2.9 | 38.1 | 22.7 | 60.8 |
| ASGROW BRAND AG2705 | 2.7 | 723 (50.7) | 3.0 | 40.9 | 21.3 | 62.2 |
| PIONEER BRAND 92M80 | 2.8 | 770 (54.0) | 2.3 | 39.8 | 22.2 | 62.0 |
| DEKALB BRAND DKB28. 53 | 2.8 | 756 (53.0) | 3.1 | 39.5 | 21.9 | 61.4 |
| ASGROW BRAND AG2801 | 2.8 | 750 (52.6) | 2.9 | 39.9 | 21.7 | 61.5 |
| SYNGENTA BRAND S28-L9 | 2.8 | 732 (51.3) | 4.6 | 42.2 | 20.0 | 62.2 |

Table 4. Yield trial evaluation of the high protein soybean varieties DBL3204F0R, DFN3204E04, and DBL3404D0R, and selected commercial soybean varieties. The results represent the means of 31 different locations across the Midwestern United States.

| **VARIETY** | **RELATIVE MATURITY** | **YIELD (l/ha (bu/A))** | **LODGING SCORE** | **PROTEIN (% dmb)** | **OIL (% dmb)** | **PROT +OIL (% dmb)** |
|---|---|---|---|---|---|---|
| **DBL3204F0R** | **3.2** | **673 (47.2)** | **1.9** | **44.3** | **20.5** | **64.8** |
| **DFN3204E0R** | **3.2** | **674 (47.3)** | **2.7** | **44.4** | **19.5** | **63.9** |
| **DBL3404D0R** | **3.4** | **684 (48.0)** | **33** | **45.3** | **20.1** | **65.4** |
| DEKALB BRAND DKB31-51 | 3.1 | 733 (51.4) | 2.1 | 38.8 | 23.4 | 62.2 |
| ASGROW BRAND AG3202 | 3.2 | 744 (522) | 3.0 | 39.6 | 21.8 | 61.4 |
| SYNGENTA BRAND S32-G5 | 3.2 | 692 (48.5) | 2.1 | 36.1 | 22.7 | 58.8 |
| ASGROW BRAND AG3302 | 3.3 | 732 (51.3) | 3.2 | 39.0 | 22.2 | 61.2 |
| ASGROW BRAND AG3305 | 3.3 | 757 (53.1) | 2.3 | 35.3 | 22.8 | 58.1 |
| SYNGENTA BRAND S34-U4 | 3.4 | 733 (51.4) | 3.4 | 38.6 | 21.7 | 60.3 |
| PIONEER BRAND 93M41 | 3.4 | 727 (51.0) | 2.7 | 37.8 | 22.9 | 60.7 |
| ASGROW BRAND AG3401 | 3.4 | 764 (53.6) | 3.4 | 40.5 | 21.6 | 62.1 |
| PIONEER BRAND 93M60 | 3.6 | 740 (51.9) | 3.4 | 39.2 | 22.2 | 61.4 |

The results above exemplify high protein soybean varieties, having an oil plus protein content of at least about 64% and capable of commercial yields, which could be used in generating the high protein soybean meal of the present invention,

### EXAMPLE 2

This example describes the production of EXP125A soybeans used in preparing a high protein soybean meal of the present invention.

The EXP125A soybeans are described as "Soybean Variety 007583" in U.S. Patent Application No. 10/194,922, ATCC deposit number PTA-5764.

Yield trials were conducted to evaluate EXP125A, and other examples of high protein soybean varieties, EXP2702REN and EXP2902REN. The trials were conducted under standard agronomic practices typically used by commercial seed producers, across 14 different locations throughout Indiana, Illinois, and Iowa and in each location comparisons were made to selected commercial varieties. The results of the trials are shown below, in Table 5, with the yields expressed as averages across 14 locations. The results indicate that the high protein soybeans evaluated in these trials were capable of a commercial yield.

Table 5. Evaluation of high protein varieties EXP 125A, EXP2702REN, and EXP2902REN, and selected commercial varieties. The results represent the means of 14 different trial locations across the Midwestern United States.

| **Type** | **Variety** | **Yield (l/ha (bu/A))** |
|---|---|---|
| High Protein | EXP125A | 670 (47) |
| High Protein | EXP2702REN | 670 (47) |
| High Protein | EXP2902REN | 656 (46) |
| | | |
| Commercial | Asgrow A2247 | 656 (46) |
| Commercial | Asgrow A2553 | 756 (53) |
| Commercial | Pioneer 92B23 | 684 (48) |
| Commercial | Pioneer 92B35 | 684 (48) |
| Commercial | NK24-L2 | 684 (48) |

To generate the quantity of soybeans needed for processing into high protein meal and the subsequent feeding trials described herein, the EXP125A soybeans were grown under standard agronomic practices in different locations in the midwestern United States (Iowa, Illinois, and Indiana). The production encompassed a total of approximately 4,860 ha (12,000 acres) of commercial farmland. A total of approximately 14,500 tons of soybean grain was harvested from all locations. All grain produced was transported to a common commercial scale processing facility.

### EXAMPLE 3

This example describes the production of a high protein soybean meal at a commercial scale processing facility. All unit operations described below were performed using commercially available equipment.

High protein soybeans, as described in Example 2, were delivered via truck, to the commercial processing facility. The delivered moisture contents of the soybeans were in the range of 11-12%. The oil content was measured at 19.5 wt%, and the protein content was measured at 45.2 wt% (dry matter basis).

The soybeans were cleaned and then dried to an average starting moisture of 10.4 wt%. The cleaned and dried soybeans were then cracked using double cracking rolls.

The soybean cracks were then conveyed to the 2-stage aspiration system. The resulting hulls, recovered from the aspiration stream, had an average fat content of 0.84 wt%. The resulting meats were then dehulled to ultimately yield a defatted finished meal with 2.9 wt% crude fiber. The settings on the aspiration vacuum system were adjusted as necessary to optimize the hull separation from the meats.

The meats were then heat conditioned in a rotary conditioning system. The discharge temperature was maintained between 69.7 to 71.2°C (157.4 to 160.1°F), and the nominal residence time for the cracks was 30 minutes.

A drag conveyor moved the hot cracks from the discharge of the conditioner to the feeder of several flakers. A variety of makes and models of flakers were employed during the processing of the cracks. The resulting flakes from all flakers were less than 0.4 mm (0.016") thick. Approximately 60% of the flakes produced were subsequently expanded, using an expander, to produce collets.

The flakes and collets were then solvent extracted with iso-hexane percolated through a 7.9 m (26 foot) diameter fixed bottom extractor at a ratio of 0.7-0.8 kg solvent/kg (0,7 - 0.81b solvent/lb) whole beans. The mixed collet and flake bed depth was 2.4 m (8 feet). The solids residence time was typically 20 minutes. The extractor temperature was maintained between 55.8 and 60°C (132.4 and 140.0°F).
The solids to solvent feed ratio, solids residence time, solvent drainage time, bed depth, and other extractor parameter settings were adjusted to optimize oil extraction, and were within the ranges typically employed by those skilled in the art.

The solvent extracted flakes and collets were desolventized using a 4.27 m (168 inch) desolventizer-toaster (DT). The extracted soybean oil was desolventized by a sequence of two rising film evaporators followed by one oil stripper, in series. Operating conditions were those typical for a commercial soybean extraction facility, and well known to those of skill in the art.

The resulting soybean meal was dried to a moisture content of less than 12.5 wt%, and then cooled to less than 40 °C (104°F). The soybean meal was then hammer-milled such that greater than 80% of a representative sample could pass through a 2 mm (U.S. #10 mesh) screen.

Approximately 1140 metric tons of high protein soybean meal was produced as described above. Composite samples from each railcar loaded out were analyzed, and the results are shown below in Table 6. This meal was then used in feeding trials as described in the following Example.

Table 6. Analysis of composite examples of high protein soybean meal generated as described in Example 3.

| | **Urease pH rise¹** | **Crude Protein (%)** | **Residual Crude Fat (%)** | **Crude Fiber (%)** | **Moisture (%)** |
|---|---|---|---|---|---|
| Minimum | 0.02 | 52.8 | 0.9 | 2.6 | 11.4 |
| Average | 0.05 | 53.6 | 1.0 | 2.9 | 12.0 |
| Maximum | 0.11 | 54.4 | 1.2 | 3.4 | 12.6 |

| | | | | | |
|---|---|---|---|---|---|
| ¹ Urease pH rise is an indicator of the extent of protein denaturation taken place during the toasting operation. The pH rise is directly proportional to the amount of nondenatured urease. | | | | | |

### EXAMPLE 4

This example describes a feeding trial with swine, evaluating the high protein soybean meal generated as described in Example 3. The metabolizable energy of the high protein soybean meal was measured in swine according to methods known to those having ordinary skill in the art. Table 7 details the feed conversion rate ("FCR") of swine in twelve feeding trials. The feed conversion rate measures the amount of feed intake versus the animal's weight gain. All data are compared with the 46 or 48% dehulled soybean meal. High protein soybean meal was formulated at 209 kJ/kg (50 kcal/kg) greater than commodity soybean meal.

**Table 7. Results from swine feed conversion trials.**

| **Trial** | **Feeding stage** | **Improved FCR, points** |
|---|---|---|
| 1 | 7 to 21d, suckling | 3.7 |
| 2 | D7 to 7 kg, suckling | 0.4 |
| 3 | 7 to 33 d, suckling | 27.2 |
| 4 | 21 to 51 d, phase I post weaning | 3.9 |
| 5 | 7 to 12 kg, phase I post weaning | 6.7 |
| 6 | 7 to 12 kg, phase I post weaning | 6.0 |
| 7 | 12 to 25 kg, phase II post weaning | 9.0 |
| 8 | 51 to 71 d, phase II post weaning | 4.9 |
| 9 | 8 to 20 kg, phase I, Ii post weaning | 8.0 |
| 10 | 20 to 50 kg, growing | 8.0 |
| 11 | 20 to 50 kg, growing | 10.0 |
| 12 | 20 to 50 kg, growing | 9.4 |

## Claims

1. Use of a soybean meal comprising at least 58% protein on a dry weight basis, wherein no exogenous source of protein has been added, and wherein said meal is generated from a soybean capable of commercial yields as a swine feed.

2. The use of claim 1 wherein the soybean has a protein content of at least 45% on a dry weight basis.

3. The use of claim 1 wherein the soybean has an oil plus protein content of at least 64% on a dry weight basis.

4. The use of claim 1, wherein the meal comprises at least 60% protein on a dry weight basis.

5. The use of claim 1, wherein the meal comprises at least 62% protein on a dry weight basis.

6. The use of claim 1 wherein the meal results from the processing of a high protein soybean variety, said soybean variety having a mean whole seed total protein content of greater than 45% on a dry weight basis, and wherein the soybean variety is capable of commercial yields.

7. The use of claim 1 wherein the meal is generated from a soybean variety comprising ATCC deposit number PTA-5764.

8. A method of feeding swine comprising incorporating into a feed ration a soybean meal comprising at least 58% protein on a dry weight basis, wherein no exogenous source of protein has been added, and wherein said meal is generated from a soybean capable of commercial yields.

9. The method of claim 8, wherein the meal comprises at least 60% protein on a dry weight basis.

10. The method of claim 8, wherein the meal comprises at least 62% protein on a dry weight basis.

## Patentansprüche

1. Verwendung eines Sojaextraktionsschrots, das wenigstens 58% Protein auf Trockengewichtsbasis umfasst, wobei keine exogene Proteinquelle hinzugefügt wurde und wobei der Schrot aus einer Sojabohne erzeugt wird, die kommerzielle Erträge liefern kann, als Schweinefutter.

2. Verwendung gemäß Anspruch 1, wobei die Sojabohne einen Proteingehalt von wenigstens 45% auf Trockengewichtsbasis aufweist.

3. Verwendung gemäß Anspruch 1, wobei die Sojabohne einen Öl-plus-Protein-Gehalt von wenigstens 64% auf Trockengewichtsbasis aufweist.

4. Verwendung gemäß Anspruch 1, wobei der Schrot wenigstens 64% Protein auf Trockengewichtsbasis umfasst.

5. Verwendung gemäß Anspruch 1, wobei der Schrot wenigstens 62% Protein auf Trockengewichtsbasis umfasst.

6. Verwendung gemäß Anspruch 1, wobei der Schrot aus der Verarbeitung einer proteinreichen Sojasorte resultiert, wobei diese Sojasorte einen mittleren Vollkorn-Gesamtproteingehalt von mehr als 45% auf Trockengewichtsbasis aufweist und wobei die Sojasorte kommerzielle Erträge liefern kann.

7. Verwendung gemäß Anspruch 1, wobei der Schrot aus einer Sojasorte erzeugt ist, die die ATCC-Hinterlegungsnummer PTA-5764 umfasst.

8. Verfahren zum Füttern von Schweinen, umfassend das Einarbeiten eines Sojaextraktionsschrots, das wenigstens 58% Protein auf Trockengewichtsbasis umfasst, wobei keine exogene Proteinquelle hinzugefügt wurde und wobei der Schrot aus einer Sojabohne erzeugt wird, die kommerzielle Erträge liefern kann, in eine Futterration.

9. Verfahren gemäß Anspruch 8, wobei der Schrot wenigstens 60% Protein auf Trockengewichtsbasis umfasst.

10. Verfahren gemäß Anspruch 8, wobei der Schrot wenigstens 62% Protein auf Trockengewichtsbasis umfasst.

## Revendications

1. Utilisation d'un tourteau de soja comprenant au moins 58 % de protéine sur une base de poids sec, dans lequel aucune source exogène de protéine n'a été ajoutée, et dans lequel ledit tourteau est généré à partir d'un soja capable de rendements commerciaux comme alimentation porcine.

2. Utilisation selon la revendication 1, dans laquelle le soja a une teneur en protéine d'au moins 45 % sur une base de poids sec.

3. Utilisation selon la revendication 1, dans laquelle le soja a une teneur en huile plus protéine d'au moins 64 % sur une base de poids sec.

4. Utilisation selon la revendication 1, dans laquelle le tourteau comprend au moins 60 % de protéine sur une base de poids sec.

5. Utilisation selon la revendication 1, dans laquelle le tourteau comprend au moins 62 % de protéine sur une base de poids sec.

6. Utilisation selon la revendication 1, dans laquelle le tourteau résulte du traitement d'une variété de soja à haute teneur en protéine, ladite variété de soja ayant une teneur moyenne en protéines totales sur la graine entière supérieure à 45 % sur une base de poids sec, et dans laquelle la variété de soja est capable de rendements commerciaux.

7. Utilisation selon la revendication 1, dans laquelle le tourteau est généré à partir d'une variété de soja comprenant le numéro de dépôt ATCC PTA-5764.

8. Procédé d'alimentation de porcs comprenant l'incorporation dans une ration alimentaire d'un tourteau de soja comprenant au moins 58 % de protéine sur une base de poids sec, dans lequel aucune source exogène de protéine n'a été ajoutée, et dans lequel ledit tourteau est généré à partir d'un soja capable de rendements commerciaux.

9. Procédé selon la revendication 8, dans lequel le tourteau comprend au moins 60 % de protéine sur une base de poids sec.

10. Procédé selon la revendication 8, dans lequel le tourteau comprend au moins 62 % de protéine sur une base de poids sec.
